(19) **Europäisches Patentamt**
**European Patent Office**
**Office européen des brevets**

(11) **EP 2 591 251 B1**

(12) **EUROPEAN PATENT SPECIFICATION**

(45) Date of publication and mention
of the grant of the patent:
**09.09.2020 Bulletin 2020/37**

(21) Application number: **11803901.5**

(22) Date of filing: **01.07.2011**

(51) Int Cl.:
**F16H 59/52** *(2006.01)*    **G01G 19/08** *(2006.01)*

(86) International application number:
**PCT/SE2011/050894**

(87) International publication number:
**WO 2012/005670 (12.01.2012 Gazette 2012/02)**

(54) **METHOD AND DEVICE FOR ESTIMATION OF WEIGHT OF A VEHICLE**

VERFAHREN UND VORRICHTUNG ZUR ERMITTLUNG DES GEWICHTS EINES FAHRZEUGS

PROCÉDÉ ET DISPOSITIF POUR ESTIMER LE POIDS D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.07.2010 SE 1050772**

(43) Date of publication of application:
**15.05.2013 Bulletin 2013/20**

(73) Proprietor: **Scania CV AB
151 87 Södertälje (SE)**

(72) Inventors:
• **GUSTAFSSON, Moa
S-151 44 Södertälje (SE)**
• **ÖHLUND, Erik
S-153 38 Järna (SE)**
• **MOLIN, Patrik
S-151 46 Södertälje (SE)**

(74) Representative: **Scania CV AB
Patents, GP 117kv
151 87 Södertälje (SE)**

(56) References cited:
**EP-A1- 0 678 737        EP-A2- 2 085 656
WO-A1-02/08640          WO-A1-2009/071104
US-A- 5 406 862         US-A1- 2003 040 861
US-A1- 2005 065 695     US-A1- 2008 126 009
US-A1- 2010 108 406     US-A1- 2010 108 406
US-B2- 7 039 519**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The present invention relates to a method and a device for estimating a weight of a vehicle. In particular the invention relates to a method and a device according to the preambles of the independent claims. The invention relates also to a computer programme and computer programme product, to use of a weight estimated according to the invention, and to a motor vehicle which comprises at least one such device.

**Background to the invention**

In automatic gear change systems for vehicles with manual gearboxes, gear choice is based on various different parameters, e.g. road gradient and the vehicle's running resistance. For the gear change system to make correct gear change choices, information about the vehicle's weight is also needed. This is particularly important when the vehicle is being set in motion from stationary, since correct gear choice may be crucial for whether it can move off or not. Usually various estimates of the vehicle's weight are made when it is in motion/operation and a final weight is chosen and is then used as input parameter in the gear change system for calculation of relevant gears.

Known methods for estimation of vehicle weight are based on the vehicle's acceleration and on information from any air suspension system with which the vehicle may be fitted.

In the case of vehicles with load-detecting systems, e.g. air suspension systems, a known method for estimating the vehicle's weight is based on the air suspension. In such a system the axle pressure is measured and can be directly converted to a vehicle weight by means of information about the type of vehicle. This method may also be used to estimate the vehicle's weight when it is stationary. Other known methods for weight estimation are based on the vehicle's acceleration and/or retardation but suffer from the limitation that estimating the weight of the vehicle can only be done when it is in motion.

Site vehicles are a type of vehicle used for heavy duty purposes, e.g. tippers, quarry/mine trucks and timber trucks. These types of vehicles usually have no air suspension but a leaf spring system which is not a load-detecting system. This means that the weight of these types of vehicles cannot be estimated when they are stationary, since its estimation usually involves using the force equation $F = m \cdot a$, which is not applicable when the vehicle is stationary and its acceleration is therefore zero.

In a situation where unloading/loading of the vehicle has taken place, any estimate of its resulting weight on the basis of its weight before the unloading/loading operation will result in incorrect gear choice because its weight will have been substantially altered by said unloading/loading.

In a typical such scenario, an unladen site vehicle might travel down into an opencast mine and be loaded there before travelling back up out of the mine with a view to unloading. When the vehicle is being set in motion after loading, the gear change system will base gear choice on the latest weight estimated before the loading operation. This latest weight estimated before loading will be substantially different from the resulting laden weight of the vehicle and may well lead to incorrect gear choice.

This becomes particularly dangerous when the estimated weight is too low relative to the actual weight, resulting mainly in two problems. One is that if it is set in motion from stationary in such a high initial gear that the engine torque is not sufficient to overcome the running resistance, the vehicle will not be able to move off, causing unnecessary clutch wear. Such a situation is usually handled by the gear change system by the engine torque being increased until the running resistance is overcome, which entails the gear change system having to choose another, lower, initial gear. The second problem is that if the vehicle reaches an upgrade in too high a gear, it will in the worst case be liable to stall and come to a halt on the hill.

Other aggravating circumstances when estimating vehicle weight by the force equation arise when the ground on which the vehicle is to travel does not have a hard and/or even surface, e.g. of asphalt or concrete. Estimation is more difficult on, for example, soft running surfaces such as sand and loose gravel, since the rolling resistance varies greatly on such surfaces, making it difficult to calculate a correct running resistance for use in estimating the weight of the vehicle.

The above indicates that there is a need for an improved method for estimating the weight of a vehicle as compared with the state of the art. In particular there is need for a method for estimating the weight of stationary vehicles and/or those travelling on soft and/or uneven surfaces where prior art methods are inapplicable or less applicable

Document D1 discloses a method for estimation of weight of a vehicle using accelerometers provided in the vehicle.

**Brief description of the invention**

An object of the present invention is to propose a method for estimating the weight of a vehicle which wholly or partly overcomes deficiencies and disadvantages of prior art methods for estimating the weight of vehicles.

Another object of the invention is to propose a method by which estimation of their weight is possible for vehicles which are stationary and/or travelling on soft and/or uneven surfaces where prior art methods are inapplicable or unusable.

A further object of the invention is to propose an alternative and simplified method for estimating the weight of a vehicle compared with prior art methods.

According to an aspect of the invention, the above objects are achieved with a method for estimation of weight of a vehicle, comprising the steps of:

- calculating at least a first weight $m_1$ of the vehicle;
- detecting whether unloading/loading of the vehicle has taken place; and
- estimating a second weight $m_2$ of the vehicle on the basis of the vehicle operating history.

Embodiments of the above method are defined in the dependent claims pertaining to the method.

The invention relates also to a computer programme and a computer programme product related to any method according to the invention. The invention relates also to use of a weight estimated by any method according to the invention, and preferably to use of the estimated weight as an input parameter in gear choices and/or gear choice strategies in a motor vehicle.

According to another aspect of the invention, the above objects are also achieved with a device for estimation of weight of a vehicle, which device comprises at least one calculation unit and at least one memory unit and is adapted to:

- calculating at least a first weight $m_1$ of the vehicle;
- detecting whether unloading/loading of the vehicle has taken place; and
- estimating a second weight $m_2$ of the vehicle on the basis of information about its operating history.

The device may also be modified according to the various embodiments of the above method. The invention relates also to a motor vehicle, e.g. passenger car, truck or bus, which comprises at least one such device.

The present invention proposes a method and device which make it possible to estimate a weight of a vehicle when it is stationary. The invention may further propose estimation of the vehicle's weight when travelling on soft and/or uneven surfaces, since the solution according to the invention makes it possible to disregard the nature of the running surface. Moreover, if the vehicle is equipped with one or more accelerometers, there is no need to install further sensors for estimating its weight, since the existing accelerometers may be used in estimating its weight according to an embodiment of the invention.

Further advantages and applications of a method and a device according to the invention are indicated by the detailed description set out below.

**Brief description of drawings**

In the detailed description of the present invention set out below, embodiments of the invention are described with reference to the attached drawings, in which:

- Figure 1 is a flowchart of detection of unloading/loading according to an embodiment of the invention;
- Figure 2 depicts an example of operating history represented by a bar chart of previous weights of a vehicle divided into discrete ranges;
- Figure 3 is a flowchart of how a weight of a vehicle is estimated from its operating history;
- Figure 4 is a flowchart of storage of operating history in terms of numbers of estimates;
- Figure 5 is a flowchart of storage of operating history in terms of time; and
- Figure 6 depicts schematically a control unit comprising a calculation unit and a memory unit.

**Detailed description of the invention**

Methods of estimating the weight of a vehicle by means of the force equation are such that its weight cannot be estimated when it is stationary, and these methods also produce very poor or no estimates at all in certain conditions, e.g. when estimating on soft and/or uneven running surfaces such as sand or loose gravel.

Accordingly, the present invention is intended to propose an improved and/or alternative method and device for estimating a weight of a vehicle. The method according to the invention comprises the steps of calculating at least

a first weight $m_1$ of the vehicle, detecting whether unloading/loading of the vehicle has taken place, and estimating a second weight $m_2$ of the vehicle on the basis of information about its operating history.

A basic concept of the invention is detecting whether unloading/loading of the vehicle has taken place, in order thereafter to estimate its weight, since the inventors have found that such detection has an information content which can be used in estimating the vehicle's weight. The detection may be done by various different methods and according to an embodiment of the invention it is done on the basis of one or more signals from one or more accelerometers provided on the vehicle.

It is not unusual that vehicles, e.g. site vehicles and trucks, have one or more accelerometers arranged in the vehicle's longitudinal direction, e.g. on the clutch actuator/actuators. An accelerometer which measures acceleration in the vehicle's longitudinal direction measures also a component of the acceleration due to gravity which is parallel with the gradient of the road, according to the formula

$$a_s = a_v + g \cdot \sin(\alpha)$$

in which $a_s$ is the value from the accelerometer, $a_v$ the vehicle's acceleration, g the acceleration due to gravity and a the relevant/current road gradient affecting the vehicle. An accelerometer is used to make estimates of the vehicle's weight during its acceleration/retardation and for estimating the road gradient affecting the vehicle.

An accelerometer can thus be used to discover a gradient change which affects the vehicle. Part of the inventive step made by the inventors is their insight that this information can be used for detecting whether unloading/loading of the vehicle has taken place. If an unloading/loading operation results in a large enough movement of the vehicle, the accelerometer will register the change, making it possible to detect/discover the unloading/loading.

To exclude other factors which might affect detection by accelerometer, certain conditions are applicable for valid detection. First and foremost is checking that the vehicle is stationary during unloading/loading, i.e. by examining the rotation speed of the propeller shaft, and that the vehicle's ignition is on, for the accelerometer to be able to register anything at all. Examples of further conditions which sometimes need to be met for ensuring that what is detected really is an unloading/loading operation comprise checking that the deflection of the accelerometer is not due to acceleration or retardation caused by the vehicle being set in motion or brought to a halt.

An embodiment of the invention examines the amplitude of the signal/signals from the accelerometer/accelerometers when the vehicle is stationary. If the amplitude of the signal $|A|$ exceeds a threshold value $A_T$ which is higher than a noise amplitude of the signal $|A_N|$, a check is done to ensure that a change in the amplitude is not caused by the vehicle having just been set in motion or brought to a halt or by the engine having been started or shut down. If such is not the case, what is detected according to this embodiment of the invention is an unloading/loading operation. A large proportion of the signal noise from accelerometers is caused by vibrations from the engine. An advantage of detection by accelerometers is that detection of unloading/loading can be done when the vehicle is stationary.

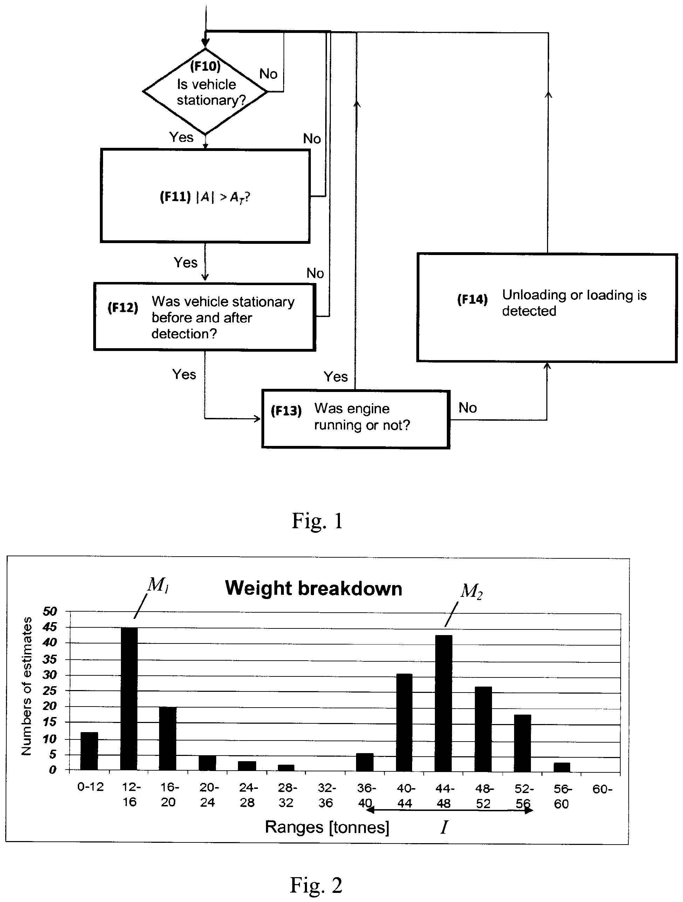

The flowchart in Figure 1 illustrates detection of unloading/loading according to embodiments described above. Step F10 checks that the vehicle is stationary. If it is not, no detection takes place, but if the vehicle is stationary, then step F11 compares whether the amplitude $|A|$ of the signal (from an accelerometer) does or does not exceed a threshold value $A_T$. If it does, then step F12 does a further check to see whether the vehicle was stationary before and after the detection, which may be done by examining the rotation speed of the propeller shaft (which will be zero if the vehicle is stationary) with respect to when the amplitude $|A|$ is compared with the threshold value $A_T$. If it is found at step F12 that the vehicle was stationary, the next step F13 checks also whether the engine was running or not, by examining the engine speed and an ignition signal (a signal indicating whether the ignition is on or not), since the signal from the accelerometer might be affected/disturbed by the engine being started or shut down. If the engine was not running, this embodiment detects unloading/loading of the vehicle.

Certain types of vehicles have a binary load pattern whereby they are either substantially unladen or fully laden. These types of vehicles therefore have either a low (unladen) or a high (fully laden) weight, e.g. site vehicles for carrying opencast material. For vehicles with such a binary load pattern, it is desirable that only detection of complete unloading/loading be recorded, since unloading/loading may take place in stages, e.g. a gravel truck may receive several bucket loads before its cargo capacity is fully utilised. Such a loading procedure might otherwise lead to each stage of the loading process being detected as a separate complete unloading/loading operation. Such situations may be avoided by imposing the condition that the vehicle has to travel a certain distance and/or above a certain speed before a fresh unloading/loading operation is deemed to have been detected by accelerometers, e.g. travelling for at least 100 m or at over 10 km/h.

Situations also sometimes arise where unloading/loading of a vehicle takes place undetected when it is stationary, e.g. if its ignition is off during an unloading or loading procedure and accelerometers are used for detection.

According to another embodiment of the invention, in such a situation, detection of unloading/loading entails using the first calculated weight $m_1$ (calculated before unloading/loading) and a third calculated weight $m_3$. According to this embodiment, a difference determined in absolute terms between the first weight $m_1$ and a subsequent calculated third weight $m_3$ may be compared to detect whether unloading/loading has taken place. If said difference assumes a value above a threshold value T, this embodiment detects an unloading or loading operation, i.e. if $|m_1 - m_3| > T$. In contrast, if said difference assumes a value below the threshold value $T$, no unloading/loading is detected. The threshold value $T$ depends inter alia on the vehicle's first weight $m_1$, since the relative/percentage difference between the weights $m_1$ and $m_3$ is relevant in this case.

The third weight $m_3$ is calculated after the first weight $m_1$, preferably a relatively short time after the vehicle has been set in motion, i.e. when the vehicle has moved off. As the third weight $m_3$ is calculated soon after the vehicle has moved off, this calculation will produce for its weight an approximately calculated value which may differ substantially from its actual weight. The reason is that parameters, e.g. various forces in a force equation (if such is used), for calculation of the third weight $m_3$ are not always fully known just after the vehicle has been set in motion, so the calculation of the third weight $m_3$ is based on incomplete information about relevant forces and possibly other parameters.

Another insight and basic concept of the invention is use of information about a vehicle's previous weight in order to estimate its current weight. Said information is obtained from the vehicle's operating history, which according to the invention entails the operating history of its previous weights over a preceding period of time P being stored for subsequent use in estimating its current weight. A vehicle's operating history is an accumulation of information about the various weight values which the vehicle has historically assumed, and therefore contains information which is used in the present invention in order to estimate its current weight.

The period $P$ is a parameter which may be chosen according to the vehicle's circumstances. This parameter affects the statistical basis of the operating history over time. Different types of vehicles have different operating patterns as regards numbers of unloading/loading operations per unit time, so the period $P$ may be chosen or adapted according to these load patterns.

According to another embodiment of the invention, the information about a vehicle's previous weight is a breakdown of its weight during the given period $P$. Figure 2 illustrates an example of such a weight breakdown for a site vehicle. Figure 2 breaks its previous weights down into discrete ranges set out in this example in the form of a bar chart in which the y-axis denotes the number of times a vehicle's previous weight has been within a given range and the x-axis denotes the weight in tonnes.

The breakdown in Figure 2 also has a first peak $M_1$ (the left peak, which is a first local maximum) and a second peak $M_2$ (the right peak, which is a second local maximum). The first peak corresponds to an earlier weight which the vehicle has assumed most frequently when not laden, and the second peak similarly corresponds to an earlier weight which the vehicle has historically assumed most frequently when laden.

The respective peaks $M_1$ and $M_2$ in Figure 2 may therefore each be interpreted as the weight value which the vehicle has most frequently assumed when substantially unladen (left peak) or substantially fully laden (right peak) according to the operating history of the specific vehicle. This breakdown with two peaks as in Figure 2 is usual for vehicles which usually or substantially have a binary load pattern.

If an unloading or loading operation is detected when the vehicle is stationary (e.g. by accelerometers) the further information which is available according to an embodiment of the invention comprises the previous weight breakdown according to the vehicle's operating history and a calculated first weight $m_1$ of the vehicle before unloading or loading (e.g. calculated by the force equation), so the calculation of the first weight $m_1$ takes place before the detection step according to that embodiment.

Moreover, assuming that the vehicle is a site vehicle and therefore usually travels fully laden or unladen (i.e. a binary load pattern as above), the weight breakdown according to the operating history will have two peaks $M_1$ and $M_2$ such that the first peak $M_1$ corresponds to an empty vehicle's weight $m_L$ and a second peak $M_2$ to a fully laden vehicle's weight $m_H$. To estimate the second weight $m_2$, the first weight $m_1$ is compared with these two peaks (actually the values of the weights corresponding to these peaks) in terms of absolute difference between the first weight $m_1$ and the respective weights of the peaks, i.e. $m_L$ and $m_H$.

The $m_L$ or $m_H$ weight at which said differences are smallest is closest to the first weight $m_1$ before an unloading/loading operation, and on the basis of detecting that the vehicle has become unloaded/loaded, the other of the $m_L$ or $m_H$ weights may therefore represent the estimated second weight $m_2$. Mathematically this may be described as the estimated weight, i.e. the second weight $m_2$, being estimated as

$$m_2 = m_L \text{ if } |m_1 - m_L| > |m_1 - m_H| \text{ and} \qquad (1)$$

$$m_2 = m_H \text{ if } |m_1 - m_L| \le |m_1 - m_H| \qquad (2)$$

which means that the second weight $m_2$ is in this case estimated on the basis of a first weight $m_1$ calculated before the unloading/loading operation, and the vehicle's operating history.

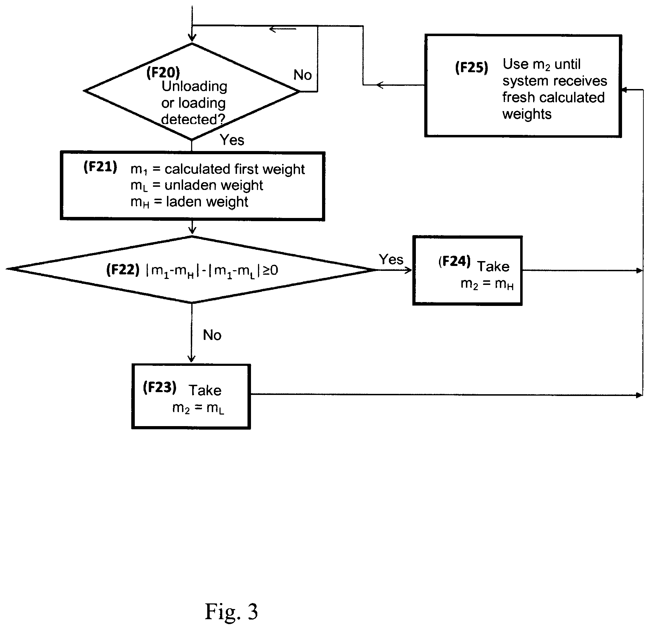

The above embodiment of the invention is illustrated in the flowchart in Figure 3. Step F20 detects whether unloading/loading has taken place and, if such is the case, step F21 provides a first weight $m_1$ calculated before the unloading/loading. Step F21 also determines the vehicle's unladen weight $m_L$ and fully laden weight $m_H$ from its operating history by finding respective first and second local maxima $M_1$ and $M_2$. Step F22 then checks whether the condition according to the F22 equation is fulfilled and, if such is the case, step F24 estimates the second weight as $m_2 = m_H$. If such is not the case, step F23 estimates the second weight as $m_2 = m_L$. Step F25 then uses the second weight $m_2$, e. g. as an input parameter for gear choice in a gear change system of the vehicle until further calculated weight values are arrived at, e.g. by the force equation. This embodiment makes it possible to estimate the vehicle's weight even when it is stationary.

A further embodiment of the invention uses the third weight $m_3$ in estimating the second weight $m_2$.

If the detection is done after the vehicle has moved off, using the first weight $m_1$ and the third weight $m_3$ described above according to the condition $|m_1 - m_3| > T$, the third weight $m_3$ may also be used for estimating the second weight $m_2$. Since it is an approximate calculation (owing to incomplete information about relevant parameters), the third weight $m_3$ is not adopted as a direct estimate of the second weight $m_2$, but the estimation of the second weight $m_2$ is based instead on use of information content in the third weight $m_3$.

By examining a range $I$ about the third weight $m_3$ it is possible to estimate the second weight $m_2$ on the basis of the value of the third weight $m_3$. If such a range $I$ comprises a local maximum $(M_1, M_2)$, the second weight $m_2$ may be estimated as a value corresponding to said local maximum, e.g. $m_L$ or $m_H$ described above. In other words, the second weight $m_2$ is estimated as a value corresponding to a local maximum which is nearest to the third weight $m_3$ within the range $I$.

For example, if the third weight $m_3$ is calculated at 39 tonnes and the range $I$ examined comprises two adjacent lower and higher ranges in the breakdown in Figure 2, the second weight $m_2$ will in this example be estimated as $m_2 = m_H = 48$ tonnes (taking the higher value for the range 44-48 tonnes). The range $I$ may for example be determined as $I = m_3 +/- d$, where $d$ is an elective parameter which determines the magnitude of the range $I$ about values of the third weight $m_3$, but the range $I$ may also be defined as a percentage of the third weight $m_3$, with the third weight $m_3$ as base, i.e. representing 100%. It should be noted that the range $I$ need not be symmetrical about the third weight $m_3$.

A further embodiment of the invention also uses the third weight $m_3$ together with the first weight $m_1$ in estimating the second weight $m_2$ in order to refine this estimation.

This method arrives at a first estimated value of the second weight $m_2$ when the vehicle is stationary by using the embodiment described above in which the second weight is estimated as $m_2 = m_L$ if $|m_1 - m_L| > |m_1 - m_H|$ and as $m_2 = m_H$ if $|m_1 - m_L| \le |m_1 - m_H|$. When the vehicle moves off, one or more values of the third weight $m_3$ may also be arrived at by calculation, e.g. by the force equation. A second estimate (and possibly further estimates) of the second weight $m_2$ may be arrived at on the basis of the third weight $m_3$ by using a range classification of the operating history such that the second weight $m_2$ is estimated as a quantisation of the third weight $m_3$. This procedure of estimation by quantisation may then be repeated if further values of the third weight $m_3$ are arrived at.

The first weight $m_1$ and/or the third weight $m_3$ are preferably calculated by a force equation for the vehicle which in an embodiment takes the form

$$m_i = \frac{\sum F}{a} = \frac{F_t - F_r - F_a - F_\alpha}{a}$$

in which i = 1 or 3 where $a$ is an acceleration of the vehicle, $F_t$ a propulsion force of the vehicle, $F_r$ a rolling resistance for the vehicle, $F_a$ an air resistance for the vehicle, and $F_\alpha$ a resistance caused by a current road gradient affecting the vehicle.

To be able to base estimation of a weight of a vehicle on its operating history according to the invention, the operating history of its weight needs to be stored and be available in such a way that a weight can be estimated on the basis of said history. For this reason, the operating history of the vehicle's weight needs to be continuously saved and stored for subsequent use in estimation.

As memory space for storing information about previous weights, e.g. operating history, is often limited in many vehicles, it is desirable to use a storage method which copes with this memory limitation. Such a method needs to provide relevant information about the weight breakdown over time without involving too much memory capacity.

An embodiment of the present invention therefore breaks the vehicle's weight over its operating history down into a number of predetermined ranges. Each range may be allocated in a memory a variable whose value corresponds to the number of weight estimates within the respective range. Taken together, all the variables therefore describe the breakdown of the vehicle's weight across the various ranges, e.g. see Figure 2. The inventors have inter alia applied the ranges depicted in Figure 2 in tonnes to certain types of site vehicles, but it should be noted that the range classification depends inter alia on the actual weight of the vehicle and on the desired resolution for the estimation. Actual weight refers to both unladen and laden since it is important that the range classification of the operating history has relevant peaks, e.g. $M_1$ and $M_2$ in Figure 2, for the range classification to be usable for estimation of weight of a vehicle. This method of discrete ranges represents a memory-economising procedure for storage of operating history.

Any newly calculated weight which becomes available is added continuously to the operating history. This is done by comparison to see whether the calculated weight falls within the limits of a range. If this comparison is conducted from the lowest range towards higher ranges, the calculated weight will fall within the lowest range in which the comparison shows that it fits. When the correct range has been determined, the operating history can be updated.

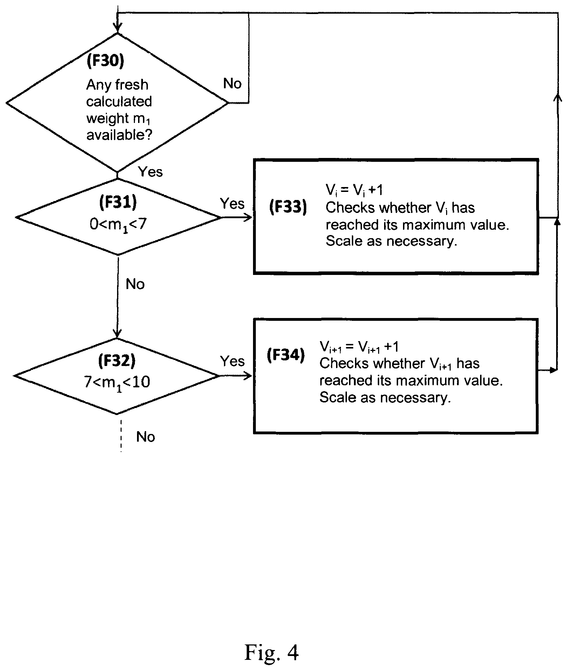

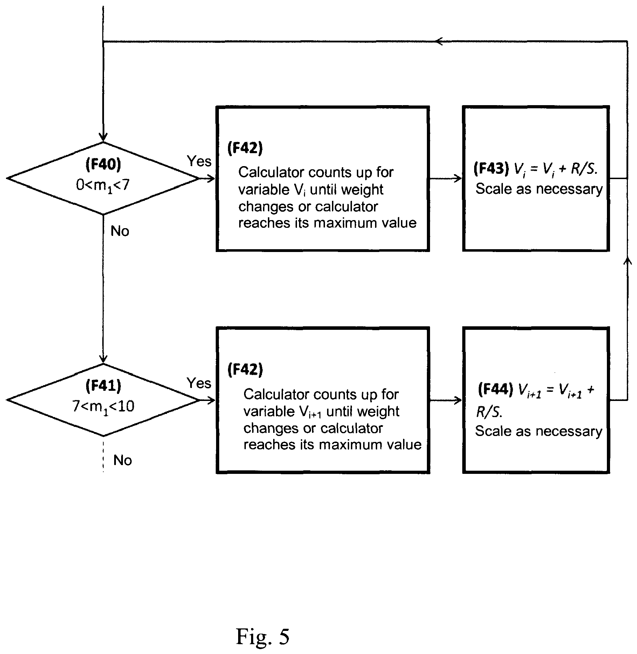

Figures 4 and 5 are two different flowcharts for storage of operating history with regard to weight, divided into discrete ranges according to two different embodiments of the invention. Figure 4 depicts the operating history in terms of numbers of estimates and Figure 5 the operating history in terms of the amount of time during which a vehicle's weight has assumed a certain range value.

The flowchart in Figure 4 checks at step F30 whether a newly calculated first weight $m_1$ is available, in which case its value is compared in the next step F31 with an upper limit for a first range (7 tonnes in this example). At Step F33 the value of a variable $V_i$ representing the first range ($i = 1$) is updated by one step, i.e. $V_i = V_i + 1$, if the first weight $m_1$ is below the upper limit for the first range. But if at step F31 the first weight $m_1$ is higher than the limit for the first range, its value is compared at step F32 with a limit for the next range (10 tonnes), and if it is below this limit the value of a variable $V_{i+1}$ representing the second range ($i = 2$) is updated at step F34 by one unit, i.e. $V_{i+1} = V_{i+1} + 1$. Otherwise the first weight $m_1$ is compared with a limit value for the next range, and so on. See below with regard to scaling of variable $V_i$.

In the flowchart in Figure 5, the value of a first weight $m_1$ is compared at step F40 with an upper limit for a first range (7 tonnes in this example) if a newly calculated first weight $m_1$ is available. At step F42 a calculator starts counting to see whether the first weight $m_1$ is below the upper limit for the first range, which entails the calculator counting until the value of the first weight $m_1$ changes or until the calculator reaches its highest value; this is followed at step F43 by a variable $V_i$ being updated by the calculator's value $R$ (= number of samples within the respective range) converted to minutes by a scale factor $S$ (= sampling frequency * 60 if the sampling frequency is in Hz and the time unit is in minutes) according to $V_i = V_i + R/S$. Variable $V_i$ thus indicates in time units (minutes in this example) how long the first weight $m_1$ has been within the first range. But if the first weight $m_1$ is higher than the limit for the first range, a comparison is done at step F41 with a limit for the next range (10 tonnes). At step F42 a calculator starts to count whether the first weight $m_1$ is lower than the limit for this range, which entails the calculator counting until the first weight $m_1$ changes or until the calculator reaches its highest value; this is followed at step F44 by a variable $V_{i+1}$ representing the second range being counted up with $V_{i+1} = V_{i+1} + R/S$. Otherwise the first weight $m_1$ is compared with a limit value for the next range, and so on. See below with regard to scaling of variable $V_i$.

In a computer implementation of an operating history storage procedure according to any of the embodiments described above, each data type (representing a variable $V_i$), e.g. a whole number or a floating point number, usually has a highest possible value which it can assume. To avoid a variable $V_i$ being counted up too high and assuming an incorrect value, an operating history storage system has, after counting up, to check whether the highest possible value for a variable $V_i$ has or has not been reached. If it has, then the values for all the ranges have to be scaled down. The reason for all of the ranges being scaled down and not only the range where variable $V_i$ has assumed its highest possible value is that the system has to keep intact the relationships between the various ranges. This is important if the breakdown is to be used in estimating a fresh vehicle weight according to the invention. Any such scaling is done at F33 and F34 in Figure 4 and at F43 and F44 in Figure 5.

Specialists will appreciate that a method for estimation of weight of a vehicle according to the present invention might also be implemented in a computer programme which, when executed in a computer, causes the computer to apply the method. The computer programme is contained in a computer programme product's computer-readable medium which takes the form of a suitable memory, e.g. ROM (read-only memory), PROM (programmable read-only memory), EPROM (erasable PROM), flash memory, EEPROM (electrically erasable PROM), hard disc unit, etc.

The second estimated weight $m_2$ according to the invention may be used in a vehicle, preferably at an input parameter in gear choices/gear choice strategies in the vehicle. However, the second estimated weight $m_2$ may also be used in other systems in which knowledge of the vehicle's weight is needed, e.g. in controlling various functions of the vehicle.

The invention further relates to a device for estimation of weight of a vehicle. The device is adapted to calculating at least a first weight $m_1$ of the vehicle, to detecting whether unloading/loading of the vehicle has taken place, and to estimating a second weight $m_2$ of the vehicle on the basis of information about its operating history. It should also be noted that the device may be modified to correspond to different embodiments of the method according to the invention described above.

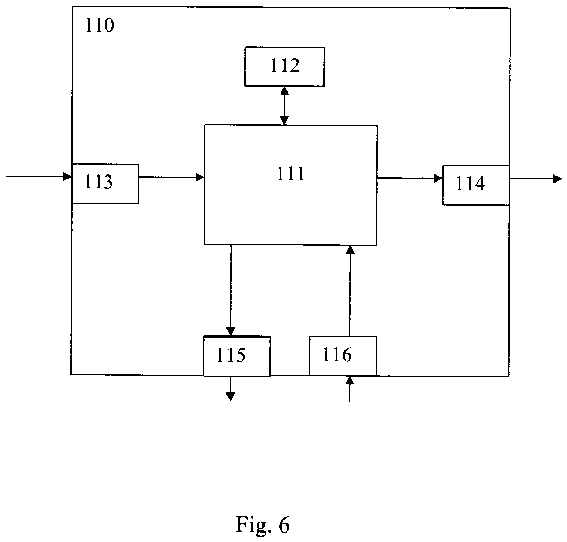

The device described above may for example be implemented in a control unit 110, e.g. an ECU (electronic control unit), schematically depicted in Figure 6. The control unit 110 comprises a calculation unit 111 which may take the form of substantially any suitable type of processor or microcomputer, e.g. a circuit for digital signal processing (digital signal processor, DSP), or a circuit with a predetermined specific function (application specific integrated circuit, ASIC). The calculation unit 111 is connected to a memory unit 112 which is incorporated in the control unit 110 and which provides the calculation unit 111 with, for example, the stored programme code and/or the stored data which the calculation unit 111 needs for it to be able to perform calculations. The calculation unit 111 is also adapted to storing partial or final results of calculations in the memory unit 112.

The control unit 110 is further provided with devices 113, 114, 115, 116 for respectively receiving input signals and sending output signals. These input and output signals may comprise waveforms, pulses or other attributes which the signal receiving devices 113, 116 can detect as information and which can be converted to signals which are processable by the calculation unit 111. The calculation unit 111 is then provided with these signals. The signal sending devices 114, 115 are adapted to converting signals received from the calculation unit 111 in order, e.g. by modulating them, to create output signals which can be transmitted to other parts of the system for determination of downshift and upshift points. One skilled in the art will appreciate that the aforesaid computer may take the form of the calculation unit 111 and that the aforesaid memory may take the form of the memory unit 112.

Each of the connections to the respective devices for receiving input signals and sending output signals may take the form of one or more from among a cable, a data bus, e.g. CAN (controller area network) bus, an MOST (media orientated systems transport) bus or some other bus configuration, or a wireless connection. The connections 70, 80, 90, 100 in Figure 6 may also take the form of one or more of these cables, buses or wireless connections.

The invention relates also to a motor vehicle, e.g. passenger car, truck or bus, comprising at least one device for estimation of a second weight $m_2$ according to the invention.

Finally, it should be noted that the present invention is not restricted to the embodiments described above of the invention but relates to and comprises all embodiments of the invention within the protective scope of the attached independent claims.

## Claims

1.  A method for estimation of weight of a vehicle, comprising the steps of:

    - calculating at least a first weight $m_1$ of the vehicle;
    - detecting whether unloading/loading of the vehicle has taken place; and
    - estimating a second weight $m_2$ of the vehicle on the basis of the operating history of its previous weights over a preceding period of time P

    wherein the detection of whether unloading or loading has taken place is on the basis of one or more signals from one or more accelerometers provided in the vehicle when the vehicle is stationary and the ignition of the vehicle is on, whereby an unloading or loading operation is detected if an amplitude of said one or more signals assumes a value higher than a threshold value.

2.  A method according to claim 1, whereby the information about the previous weight is taken from an operating history for the vehicle during a time period $P$.

3.  A method according to claim 2, whereby the information about the previous weight takes the form of a breakdown of the vehicle's weight during the time period $P$.

4.  A method according to claim 3, whereby the breakdown is divided into discrete ranges.

5.  A method according to any one of claims 3-4, whereby the breakdown takes the form of a bar chart of the vehicle's previous weight.

6.  A method according to any one of claims 3-5, whereby the breakdown is arrived at by continuous storage of a calculated weight during operation.

7.  A method according to any one of claims 3-6, whereby the breakdown comprises a first peak $M_1$ and a second peak $M_2$:

    - which first peak $M_1$ denotes a weight of the vehicle unladen $m_L$, and
    - which second peak $M_2$ denotes a weight of the vehicle laden $m_H$.

**8.** A method according to claim 7, whereby the estimate of the second weight $m_2$ is also based on the first weight $m_1$.

**9.** A method according to claim 8, whereby the vehicle's second weight $m_2$ is

- $m_L$ if $|m_1 - m_L| > |m_1 - m_H|$ and
- $m_H$ if $|m_1 - m_L| \leq |m_1 - m_H|$.

**10.** A method according to any of the foregoing claims, further comprising the step of:

- calculating at least a third weight $m_3$ of the vehicle, in which case
- the estimation of the second weight $m_2$ is also based on the third weight $m_3$.

**11.** A method for estimation of weight of a vehicle, comprising the steps of:

- calculating at least a first weight $m_1$ of the vehicle;
- detecting whether unloading/loading of the vehicle has taken place; and
- estimating a second weight $m_2$ of the vehicle on the basis of the operating history of its previous weights over a preceding period of time P
further comprising the step of
- calculating at least a third weight $m_3$ of the vehicle, in which case
- detection of whether unloading or loading has taken place is based on the first weight $m_1$ and the third weight $m_3$, such that unloading or loading is detected if the difference between the first weight $m_1$ and the third weight $m_3$ is greater than a threshold value $T$: $|m_1 - m_3| > T$.

**12.** A method according to claim 11, whereby the threshold value $T$ depends on the first weight $m_1$ of the vehicle.

**13.** A method according to claims 11-12, whereby the estimate of the second weight $m_2$ is also based on the third weight $m_3$.

**14.** A method according to any one of the foregoing claims 11-13, whereby the first weight $m_1$ and/or the third weight $m_3$ are calculated by a force equation for the vehicle, and the third weight $m_3$ is calculated after the first weight $m_1$.

**15.** A method according to claim 14, whereby the force equation for calculating the first weight $m_1$ and/or the third weight $m_3$ takes the form:

$$m_i = \frac{\sum F}{a} = \frac{F_t - F_r - F_a - F_\alpha}{a}$$

where i = 1 or 3 in which $a$ is an acceleration of the vehicle, $F_t$ a propulsion force of the vehicle, $F_r$ a rolling resistance for the vehicle, $F_a$ an air resistance for the vehicle and $F_\alpha$ a resistance caused by a road gradient affecting the vehicle.

**16.** A method according to any one of the foregoing claims, whereby the step of calculating the first weight $m_1$ takes place before the step of detecting whether an unloading or loading operation of the vehicle has taken place.

**17.** A method according to any one of the foregoing claims, whereby the information about the previous weight is taken from an operating history for the vehicle during a time period $P$.

**18.** A method according to claim 17, whereby the information about the previous weight takes the form of a breakdown of the vehicle's weight during the time period $P$.

**19.** A computer programme which comprises programme code and which, when said programme code is executed in a computer, causes said computer to apply the method according to any one of claims 1-18.

**20.** A computer programme product comprising a computer-readable medium and a computer programme according to claim 19, said programme being contained in said medium.

**21.** Use of an estimated weight according to any one of claims 1-18 in a vehicle, whereby the estimated weight is used as an input parameter in gear choices and/or gear choice strategies in the vehicle.

22. A device for estimation of weight of a vehicle, which device comprises at least one calculation unit (111) and at least one memory unit (112) and is adapted to:

- calculating at least a first weight $m_1$ of the vehicle;
- detecting whether unloading/loading of the vehicle has taken place; and
- estimating a second weight $m_2$ of the vehicle on the basis of the operating history of its previous weights over a preceding period of time P wherein

one or more accelerometers are provided for sending signals on which the detection whether unloading/loading of the vehicle has taken place are based, either
- when the vehicle is stationary and the ignition of the vehicle is on, whereby an unloading or loading operation is arranged to be detected if an amplitude of said one or more signals assumes a value higher than a threshold value; or
- on the first weight $m_1$ and a calculated third weight $m_3$, such that unloading or loading is detected if the difference between the first weight $m_1$ and the third weight $m_3$ is greater than a threshold value $T$: $|m_1 - m_3| > T$,

23. A motor vehicle, e.g. passenger car, truck or bus, comprising at least one device for estimation of weight according to claim 22.

**Patentansprüche**

1. Verfahren zur Abschätzung des Gewichts eines Fahrzeugs, umfassend die Schritte:

- Berechnen wenigstens eines ersten Gewichts $m_1$ des Fahrzeugs,
- Erfassen, ob ein Entladen/Beladen des Fahrzeugs stattgefunden hat, und
- Schätzen eines zweiten Gewichts $m_2$ des Fahrzeugs basierend auf der Betriebshistorie seiner vorausgegangenen Gewichte über eine vorausgegangene Zeitdauer P, wobei die Erfassung, ob ein Entladen oder Beladen stattgefunden hat, auf der Basis eines oder mehrerer Signale von einem oder mehreren in dem Fahrzeug vorhandenen Beschleunigungsaufnehmern erfolgt, wenn das Fahrzeug stillsteht und die Zündung des Fahrzeugs eingeschaltet ist, wodurch ein Entlade- oder Beladevorgang erfasst wird, wenn eine Amplitude des einen oder der mehreren Signale einen Wert höher als ein Schwellenwert annimmt.

2. Verfahren nach Anspruch 1, wobei die Information über das vorausgegangene Gewicht einer Betriebshistorie für das Fahrzeug während einer Zeitdauer P entnommen wird.

3. Verfahren nach Anspruch 2, wobei die Information über das vorausgegangene Gewicht die Form einer Aufgliederung des Fahrzeuggewichts während der Zeitdauer P annimmt.

4. Verfahren nach Anspruch 3, wobei die Aufgliederung in diskrete Bereiche unterteilt ist.

5. Verfahren nach einem der Ansprüche 3 bis 4, wobei die Aufgliederung die Form eines Balkendiagramms des vorausgegangenen Fahrzeuggewichts annimmt.

6. Verfahren nach einem der Ansprüche 3 bis 5, wobei die Aufgliederung durch eine fortwährende Speicherung eines berechneten Gewichts während des Betriebs erzielt wird.

7. Verfahren nach einem der Ansprüche 3 bis 6, wobei die Aufgliederung einen ersten Peak $M_1$ und einen zweiten Peak $M_2$ aufweist:

- wobei der erste Peak $M_1$ ein Gewicht des unbeladenen Fahrzeugs $m_L$ bezeichnet, und
- wobei der zweite Peak $M_2$ ein Gewicht des beladenen Fahrzeugs $m_H$ bezeichnet.

8. Verfahren nach Anspruch 7, wobei die Abschätzung des zweiten Gewichts $m_2$ auch auf dem ersten Gewicht $m_1$ basiert.

9. Verfahren nach Anspruch 8, wobei das zweite Gewicht $m_2$ des Fahrzeugs gleich

- $m_L$ ist, falls $|m_1 - m_L| > |m_1 - m_H|$, und
- $m_H$ ist, falls falls $|m_1 - m_L| \leq |m_1 - m_H|$.

10. Verfahren nach einem der vorhergehenden Ansprüche, ferner umfassend den Schritt:

- des Berechnens wenigstens eines dritten Gewichts $m_3$ des Fahrzeugs, wobei in diesem Fall
- die Abschätzung des zweiten Gewichts $m_2$ auch auf dem dritten Gewicht $m_3$ basiert.

11. Verfahren zur Abschätzung des Gewichts eines Fahrzeugs, umfassend die Schritte:

- Berechnen wenigstens eines ersten Gewichts $m_1$ des Fahrzeugs,
- Erfassen, ob ein Entladen/Beladen des Fahrzeugs stattgefunden hat, und
- Abschätzen eines zweiten Gewichts $m_2$ des Fahrzeugs auf der Basis der Betriebshistorie seiner vorausgegangenen Gewichte über eine vorausgegangene Zeitdauer P,
ferner umfassend den Schritt
- des Berechnens wenigstens eines dritten Gewichts $m_3$ des Fahrzeugs, wobei in diesem Fall
- eine Erfassung, ob ein Entladen oder Beladen stattgefunden hat, basierend auf dem ersten Gewicht $m_1$ und dem dritten Gewicht $m_3$ erfolgt, so dass ein Entladen oder Beladen erfasst wird, wenn die Differenz zwischen dem ersten Gewicht $m_1$ und dem dritten Gewicht $m_3$ größer ist als ein Schwellenwert T: $|m_1 - m_3| > T$.

12. Verfahren nach Anspruch 11, wobei der Schwellenwert T von dem ersten Gewicht $m_1$ des Fahrzeugs abhängt.

13. Verfahren nach den Ansprüchen 11 bis 12, wobei die Abschätzung des zweiten Gewichts $m_2$ auch auf dem dritten Gewicht $m_3$ basiert.

14. Verfahren nach einem der vorhergehenden Ansprüche 11 bis 13, wobei das erste Gewicht $m_1$ und/oder das dritte Gewicht $m_3$ mittels einer Kräftegleichung für das Fahrzeug berechnet werden und das dritte Gewicht $m_3$ nach dem ersten Gewicht $m_1$ berechnet wird.

15. Verfahren nach Anspruch 14, wobei die Kräftegleichung zum Berechnen des ersten Gewichts $m_1$ und/oder des dritten Gewichts $m_3$ die Form

$$m_i = \frac{\sum F}{a} = \frac{F_t - F_r - F_a - F_\alpha}{a}$$

mit i = 1 oder 3
annimmt, wobei a eine Beschleunigung des Fahrzeugs ist, $F_t$ eine Vortriebskraft des Fahrzeugs ist, $F_r$ ein Rollwiderstand für das Fahrzeug ist, $F_a$ ein Luftwiderstand für das Fahrzeug ist und $F_\alpha$ ein Widerstand ist, der durch eine das Fahrzeug beeinflussende Straßensteigung hervorgerufen wird.

16. Verfahren nach einem der vorhergehenden Ansprüche, wobei der Schritt des Berechnens des ersten Gewichts $m_1$ stattfindet, bevor der Schritt des Erfassens stattfindet, ob ein Entlade- oder Beladevorgang des Fahrzeugs stattgefunden hat.

17. Verfahren nach einem der vorhergehenden Ansprüche, wobei die Information über das vorausgegangene Gewicht einer Betriebshistorie für das Fahrzeug während einer Zeitdauer P entnommen wird.

18. Verfahren nach Anspruch 17, wobei die Information über das vorausgegangene Gewicht die Form einer Aufgliederung des Fahrzeuggewichts während der Zeitdauer P annimmt.

19. Computerprogramm, das Programmcode umfasst und das, wenn das Programm in einem Computer ausgeführt wird, den Computer dazu veranlasst, das Verfahren nach einem der Ansprüche 1 bis 18 anzuwenden.

20. Computerprogrammprodukt mit einem computerlesbaren Medium und einem Computerprogramm nach Anspruch 19, wobei das Programm in dem Medium enthalten ist.

21. Verwendung eines abgeschätzten Gewichts nach einem der Ansprüche 1 bis 18 in einem Fahrzeug, wobei das abgeschätzte Gewicht als ein Eingangsparameter in Gangwahlentscheidungen und/oder Gangauswahlstrategien in dem Fahrzeug verwendet wird.

22. Vorrichtung zur Abschätzung des Gewichts eines Fahrzeugs, wobei die Vorrichtung wenigstens eine Berechnungseinheit (111) und wenigstens eine Speichereinheit (112) aufweist und eingerichtet ist zum:

- Berechnen wenigstens eines ersten Gewichts $m_1$ des Fahrzeugs,
- Erfassen, ob ein Entladen/Beladen des Fahrzeugs stattgefunden hat, und
- Abschätzen eines zweiten Gewichts $m_2$ des Fahrzeugs auf der Basis der Betriebshistorie seiner vorausgegangenen Gewichte über eine vorausgegangene Zeitdauer P,
wobei
einer oder mehrere Beschleunigungsaufnehmer vorhanden sind zum Senden von Signalen, auf denen die Erfassung basiert, ob ein Entladen/Beladen des Fahrzeugs stattgefunden hat, entweder
- wenn das Fahrzeug stillsteht und die Zündung des Fahrzeugs eingeschaltet ist, wodurch ein Entlade-oder Beladevorgang erfasst werden kann, wenn eine Amplitude des einen oder der mehreren Signale einen höheren Wert als ein Schwellenwert annimmt, oder
- auf dem ersten Gewicht $m_1$ und einem berechneten dritten Gewicht $m_3$, so dass ein Entladen oder Beladen erfasst wird, wenn die Differenz zwischen dem ersten Gewicht $m_1$ und dem dritten Gewicht $m_3$ größer ist als ein Schwellenwert T: $|m_1 - m_3| > T$.

23. Kraftfahrzeug, z. B. ein PKW, Lastwagen oder Bus, umfassend wenigstens eine Vorrichtung zur Gewichtsabschätzung nach Anspruch 22.

## Revendications

1. Procédé d'estimation du poids d'un véhicule, comprenant les étapes :

- du calcul d'au moins un premier poids $m_1$ du véhicule ;
- de la détection de si le déchargement/ chargement du véhicule a eu lieu ; et
- de l'estimation d'un deuxième poids $m_2$ du véhicule sur la base de l'historique d'exploitation de ses poids précédents sur une période de temps précédente P

par lequel la détection de si le déchargement ou le chargement a eu lieu est sur la base d'un ou plusieurs signaux provenant d'un ou plusieurs accéléromètres fournis dans le véhicule lorsque le véhicule est stationnaire et que l'allumage du véhicule est activé, par lequel une opération de déchargement ou de chargement est détectée si une amplitude desdits un ou plusieurs signaux assume une valeur supérieure à une valeur seuil.

2. Procédé selon la revendication 1, par lequel les informations à propos du poids précédent sont prises à partir d'un historique d'exploitation pour le véhicule durant une période de temps P.

3. Procédé selon la revendication 2, par lequel les informations à propos du poids précédent prennent la forme d'une transformation du poids du véhicule durant la période de temps P.

4. Procédé selon la revendication 3, par lequel la transformation est divisée en plages discrètes.

5. Procédé selon l'une quelconque des revendications 3-4, par lequel la transformation prend la forme d'un diagramme à barres du poids précédent du véhicule.

6. Procédé selon l'une quelconque des revendications 3-5, par lequel la transformation est arrivée par le stockage continu d'un poids calculé durant l'exploitation.

7. Procédé selon l'une quelconque des revendications 3-6, par lequel la transformation comprend un premier pic $M_1$ et un deuxième pic $M_2$ :

- lequel premier pic $M_1$ indique un poids du véhicule à vide $m_L$, et
- lequel deuxième pic $M_2$ indique un poids du véhicule chargé $m_H$.

8. Procédé selon la revendication 7, par lequel l'estimation du deuxième poids $m_2$ est également basée sur le premier poids $m_1$.

9. Procédé selon la revendication 8, par lequel le deuxième poids du véhicule $m_2$ est

   - $m_L$ si $|m_1 - m_L| > |m_1 - m_H|$ et
   - $m_H$ si $|m_1 - m_L| \leq |m_1 - m_H|$.

10. Procédé selon l'une quelconque des revendications précédentes, comprenant en outre l'étape du :

    - calcul d'au moins un troisième poids $m_3$ du véhicule, auquel cas
    - l'estimation du deuxième poids $m_2$ est également sur base du troisième poids $m_3$.

11. Procédé d'estimation du poids d'un véhicule, comprenant les étapes :

    - du calcul d'au moins un premier poids $m_1$ du véhicule ;
    - de la détection de si le déchargement/ chargement du véhicule a eu lieu ; et
    - l'estimation d'un deuxième poids $m_2$ du véhicule sur la base de l'historique d'exploitation de ses poids précédents sur une période de temps précédente P
    comprenant en outre l'étape du
    - calcul d'au moins un troisième poids $m_3$ du véhicule, auquel cas
    - la détection de si le déchargement ou du chargement a eu lieu est sur base du premier poids $m_1$ et du troisième poids $m_3$, de sorte que le déchargement ou le chargement soit détecté si la différence entre le premier poids $m_1$ et le troisième poids $m_3$ est supérieur à une valeur seuil $T$ : $|m_1 - m_3| > T$.

12. Procédé selon la revendication 11, par lequel la valeur seuil $T$ dépend du premier poids $m_1$ du véhicule.

13. Procédé selon les revendications 11-12, par lequel l'estimation du deuxième poids $m_2$ est également sur base du troisième poids $m_3$.

14. Procédé selon l'une quelconque des revendications précédentes 11-13, par lequel le premier poids $m_1$ et/ ou le troisième poids $m_3$ sont calculés par une équation de force pour le véhicule, et le troisième poids $m_3$ est calculé après le premier poids $m_1$.

15. Procédé selon la revendication 14, par lequel l'équation de force pour le calcul du premier poids $m_1$ et/ ou du troisième poids $m_3$ prend la forme :

$$m_i = \frac{\Sigma \mathrm{F}}{a} = \frac{Ft - Fr - Fa - F\alpha}{a}$$

où $i$ = 1 ou 3
dans lequel a est une accélération du véhicule, $F_t$ une force de propulsion du véhicule, $F_r$ une résistance au roulement pour le véhicule, $F_a$ une résistance à l'air pour le véhicule et $F_\alpha$ une résistance causée par une pente de route affectant le véhicule.

16. Procédé selon l'une quelconque des revendications précédentes, par lequel l'étape du calcul du premier poids $m_1$ a lieu avant l'étape de la détection de si une opération de déchargement ou de chargement du véhicule a eu lieu.

17. Procédé selon l'une quelconque des revendications précédentes, par lequel les informations à propos du poids précédent sont prises à partir d'un historique d'exploitation pour le véhicule durant une période de temps P.

18. Procédé selon la revendication 17, par lequel les informations à propos du poids précédent prennent la forme d'une transformation du poids du véhicule durant la période de temps P.

19. Programme informatique qui comprend un code de programme et qui, lorsque ledit code de programme est exécuté sur un ordinateur, amène ledit ordinateur à mettre en œuvre le procédé selon l'une quelconque des revendications 1-18.

**20.** Produit de programme informatique comprenant un support lisible par ordinateur et un programme informatique selon la revendication 19, ledit programme étant contenu dans ledit support.

**21.** Utilisation d'un poids estimé selon l'une quelconque des revendications 1-18 dans un véhicule, par lequel le poids estimé est utilisé comme paramètre d'entrée dans un choix de vitesse et/ ou des stratégies de choix de vitesse dans le véhicule.

**22.** Dispositif pour une estimation du poids d'un véhicule, lequel dispositif comprend au moins une unité de calcul (111) et au moins une unité de mémoire (112) et est adapté pour :

- du calcul d'au moins un premier poids $m_1$ du véhicule ;
- de la détection de si le déchargement/ chargement du véhicule a eu lieu ; et
- de l'estimation d'un deuxième poids $m_2$ du véhicule sur la base de l'historique d'exploitation de ses poids précédents sur une période de temps précédente P

dans lequel un ou plusieurs accéléromètres sont fournis pour l'envoi de signaux sur lesquels la détection de si le déchargement/ chargement du véhicule a eu lieu sont basés, soit

- lorsque le véhicule est stationnaire et que l'allumage du véhicule est activé, par lequel une opération de déchargement ou de chargement est agencée pour être détectée si une amplitude desdits ou plusieurs signaux assume une valeur supérieure à une valeur seuil ; ou
- sur le premier poids $m_1$ et un troisième poids calculé $m_3$, de sorte que le déchargement ou le chargement soit détecté si la différence entre le premier poids $m_1$ et le troisième poids $m_3$ est supérieure à une valeur seuil $T$ : $|m_1 - m_3| > T$.

**23.** Véhicule motorisé, p. ex. véhicule de tourisme, camion ou bus, comprenant au moins un dispositif pour une estimation du poids selon la revendication 22.

Fig. 1

Fig. 2

**(F20)**
Unloading
or loading
detected?

No

**(F25)** Use $m_2$ until
system receives
fresh calculated
weights

Yes

**(F21)** $m_1$ = calculated first weight
$m_L$ = unladen weight
$m_H$ = laden weight

**(F22)** $|m_1 - m_H| - |m_1 - m_L| \geq 0$

Yes

**(F24)** Take
$m_2 = m_H$

No

**(F23)** Take
$m_2 = m_L$

Fig. 3

**(F30)** Any fresh calculated weight $m_1$ available?

No

Yes

**(F31)** $0 < m_1 < 7$

Yes

**(F33)** $V_i = V_i + 1$
Checks whether $V_i$ has reached its maximum value. Scale as necessary.

No

**(F32)** $7 < m_1 < 10$

Yes

**(F34)** $V_{i+1} = V_{i+1} + 1$
Checks whether $V_{i+1}$ has reached its maximum value. Scale as necessary.

No

Fig. 4

**(F40)**
$0<m_1<7$

Yes

**(F42)**
Calculator counts up for variable $V_i$ until weight changes or calculator reaches its maximum value

**(F43)** $V_i = V_i + R/S.$
Scale as necessary

No

**(F41)**
$7<m_1<10$

Yes

**(F42)**
Calculator counts up for variable $V_{i+1}$ until weight changes or calculator reaches its maximum value

**(F44)** $V_{i+1} = V_{i+1} + R/S.$
Scale as necessary

No

Fig. 5

Fig. 6